# EUROPEAN PATENT APPLICATION

(11) **EP 2 604 483 A1**
(43) Date of publication of application: **19.06.2013**
(21) Application number: 11816219.7
(22) Date of filing: 28.07.2011
(51) Int. Cl.: B60T 8/32, B60T 1/16, B61H 11/06

(54) **METHOD FOR CONTROLLING AIR BRAKE DEVICE**

(30) Priority: 11.08.2010 JP 2010179947
(71) Applicant: Nabtesco Corporation, Tokyo 102-0093 (JP)
(72) Inventor: FUJIWARA, Tatsuo, Kobe-shi Hyogo 651-2271 (JP); LI, Shuting, Kobe-shi Hyogo 651-2271 (JP); TAKADA, Katsuji, Kobe-shi Hyogo 651-2271 (JP)
(74) Representative: Müller-Boré & Partner Patentanwälte
(86) International application number: PCT/JP2011/004291
(87) International publication number: WO 2012/020549

(57) **Abstract**

A control method for an aerodynamic brake device which can reduce a speed of a vehicle efficiently without affecting riding comfort or a vehicle is provided. A control method for an aerodynamic brake device 550 includes at least aerodynamic brake plates 301 to 308 provided in the front in the advancing direction H1 of a railway vehicle 100 from a center part of vehicles 201 to 208, driving portions 501 to 508 and a brake controller 500 for controlling advancing operations of the aerodynamic brake plates 301 to 308, and a speedometer 560 for detecting a speed of the railway vehicle 100. The aerodynamic brake device 550 controls the advancing operations of the aerodynamic brake plates 301 to 308 in accordance with the speed of the railway vehicle 100 by the speedometer 560.

## Description

### [Technical Field]

The present invention relates to a control method for an aerodynamic brake device used for reducing a speed of a railway vehicle during running.

### [Background Art]

An increase in speed of a railway vehicle has progressed in recent years, and various brake devices have been researched and developed for reducing a speed of the railway vehicle. For example, Patent Literature 1 discloses an aerodynamic brake device for a railway vehicle which is less affected by a wind pressure regardless of a running direction when an aerodynamic brake plate is extended.

In the aerodynamic brake device described in Patent Literature 1, in an aerodynamic brake device for generating a braking force by extending an aerodynamic brake plate, a linear guide rail mounted and fixed to a vehicle body and extending in a vertical plane orthogonal to an advancing direction of the vehicle, a linear guide block disposed on the aerodynamic brake plate and slidably engaged with the linear guide rail, and extending means provided between the aerodynamic brake plate and the vehicle body and protruding and extending the aerodynamic brake plate to the outside above or side of the vehicle body.

### [Citation List]

### [Patent Literature]

[Patent Literature 1] Japanese Patent Laid-Open No. 2003-002194

### [Summary of Invention]

### [Technical Problem]

However, the aerodynamic brake device described in Patent Literature 1 is provided only on one end side of one vehicle (See Figure 1 in Patent Literature 1). Moreover, in general, a vehicle does not advance only in one direction but when it reciprocates, the opposite direction becomes an advancing direction. In the aerodynamic brake device described in Patent Literature 1, it is described that the vehicle is less affected by a wind pressure regardless of the running direction, but the inventor found that, if the aerodynamic brake device is provided in the rear in the advancing direction from the center part in one vehicle, the aerodynamic brake device gives a bad influence on a riding comfort as will be described later.

Moreover, the aerodynamic brake device described in Patent Literature 1 operates the aerodynamic brake device at the same time, and it was also found that there is a room for improvement in a control method for the aerodynamic brake device from the viewpoint of an air flow around a vehicle formation and from the viewpoint of an influence and the like given to a behavior of the vehicle formation.

The present invention has an object to provide a control method for an aerodynamic brake device which can reduce a speed of a vehicle efficiently without badly affecting a riding comfort or a vehicle formation.

### [Solution to Problem]

(1) A control method for an aerodynamic brake device according to one aspect is a control method for an aerodynamic brake device for controlling an operation of an aerodynamic brake plate provided in the front in an advancing direction of a formation from a center part of a part or the whole of vehicles of a formation composed of a plurality of vehicles and includes a step of detecting a speed of the formation and a step of determining an operation of the aerodynamic brake plate in accordance with a deceleration degree generated by the aerodynamic brake device and the speed of the formation.

In the control method for an aerodynamic brake device, a controller controls the operation of the aerodynamic brake plate provided in the front in the advancing direction of the vehicle from the center part of the vehicle.

In this case, since the aerodynamic brake plate is provided in the front in the advancing direction of the vehicle from the center part of each vehicle, regardless of the shape of the vehicle (particularly the shape of the first vehicle), an air flow can be received the strongest by the aerodynamic brake plate. As a result, performances of the aerodynamic brake plate can be utilized at the maximum. Moreover, since the aerodynamic brake plate is provided in the front in the advancing direction of the vehicle from the center part of each vehicle, vibration given to the vehicle can be reduced, and thus, a bad influence on a riding comfort of a passenger in the vehicle can be prevented. Furthermore, since the operation of the aerodynamic brake plate is determined in accordance with the deceleration degree generated by the aerodynamic brake device and the speed of the formation, the speed of the formation can be reduced efficiently without giving a bad influence on the formation.

(2) The operation of the aerodynamic brake plate may include control such that the aerodynamic brake plate of the first vehicle has a larger advancing area than that of the aerodynamic brake plate of the second vehicle in the front in the advancing direction of the first vehicle.

In this case, since the protruding area (projected area of the aerodynamic brake plate when seen from the front of the formation) of the aerodynamic brake plate increases from the front to the rear of the advancing direction of the formation, the aerodynamic brake plate in the rear in the advancing direction is subjected to less influence on the basis of a change in the air flow caused by the aerodynamic brake plate in the front in the advancing direction, and the performances of the aerodynamic brake plate can be exerted efficiently including its responsiveness.

(3) The operation of the aerodynamic brake plate may include control of advancing the aerodynamic brake plate of the first vehicle after the advance of the aerodynamic brake plate of the second vehicle in the front in the advancing direction of the first vehicle is started.

In this case, since the aerodynamic brake plate is advanced with a time difference to the rear from the advancing direction of the formation and the braking force can be generated gradually, though the responsiveness of the brake is somewhat deteriorated, a bad influence on the riding comfort or the behavior of the formation can be eliminated.

(4) The operation of the aerodynamic brake plate may include control of advancing the aerodynamic brake plate of the first vehicle after the advance of the aerodynamic brake plate of the second vehicle in the rear in the advancing direction of the first vehicle is started.

In this case, since the braking force is generated from the rear in the advancing direction to the front in the advancing direction with a time difference, though the responsiveness of the brake is somewhat deteriorated, a bad influence on the behavior of the formation can be prevented even if the deceleration degree is large.

### [Brief Description of Drawings]

[Figure 1] Figure 1 is a schematic side view illustrating an example of a railway vehicle according to an embodiment of the present invention.
[Figure 2] Figure 2 is a schematic diagram illustrating an example of a configuration of a railway vehicle.
[Figure 3] Figure 3 is an enlarged side view illustrating a part of the railway vehicle in Figure 1.
[Figure 4] Figure 4 is a schematic diagram for explaining an operation of an aerodynamic brake plate in the railway vehicle.
[Figure 5] Figure 5 is a schematic diagram for explaining an operation of the aerodynamic brake plate in the railway vehicle.
[Figure 6] Figure 6 is a flowchart illustrating an example of an operation of a brake controller.
[Figure 7] Figure 7 is a schematic operation diagram illustrating an example of a control system in processing at Step S5 in Figure 6.
[Figure 8] Figure 8 is a schematic operation diagram illustrating an example of the control system in processing at Step S5 in Figure 6.
[Figure 9] Figure 9 is a schematic operation diagram illustrating an example of the control system in processing at Step S7 in Figure 6.
[Figure 10] Figure 10 is a schematic operation diagram illustrating an example of the control system in processing at Step S7 in Figure 6.
[Figure 11] Figure 11 is a schematic diagram if an aerodynamic brake plate is provided in the front in an advancing direction from a center part of a vehicle.
[Figure 12] Figure 12 is a schematic diagram if the aerodynamic brake plate is provided at the center part of the vehicle.
[Figure 13] Figure 13 is a schematic diagram if the aerodynamic brake plate is provided in a direction opposite to the advancing direction from the center part of the vehicle.
[Figure 14] Figure 14 is a schematic diagram illustrating a result by CFD analysis.
[Figure 15] Figure 15 is a schematic diagram illustrating a result by CFD analysis.
[Figure 16] Figure 16 is a schematic diagram illustrating a result by CFD analysis.
[Figure 17] Figure 17 is a schematic side view illustrating another example of the aerodynamic brake device of the railway vehicle.
[Figure 18] Figure 18 is a schematic side view illustrating still another example of the aerodynamic brake device of the railway vehicle.
[Figure 19] Figure 19 is a schematic side view illustrating still another example of the aerodynamic brake device of the railway vehicle.
[Figure 20] Figure 20 is a schematic side view illustrating still another example of the aerodynamic brake device of the railway vehicle.
[Figure 21] Figure 21 is a schematic side view illustrating still another example of the aerodynamic brake device of the railway vehicle.

### [Reference Signs List]

100 railway vehicle
201 to 208 vehicle
211 to 216 coupler
301 to 308 aerodynamic brake plate
401 to 408 aerodynamic brake plate
500 brake controller
501 to 508, 601 to 608 driving portion
550 aerodynamic brake device
560 speedometer
H1 advancing direction

### [Description of Embodiment]

An embodiment according to the present invention will be described below by using the attached drawings.

### (Embodiment)

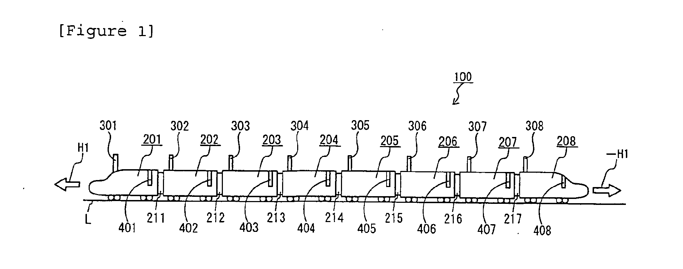

Figure 1 is a schematic side view illustrating an example of a railway vehicle 100 according to an embodiment of the present invention.

As illustrated in Figure 1, the railway vehicle 100 is a formation of vehicles running on a rail L and is composed of 8 vehicles, that is, a vehicle 201 to a vehicle 208. The vehicle 201 to the vehicle 208 are coupled by couplers 211 to 217, respectively.

In this embodiment, unless so explained, the railway vehicle 100 is assumed to run in an advancing direction H1 on the rail L in the description. Therefore, the first vehicle in the railway vehicle 100 is the vehicle 201, and the last vehicle is the vehicle 208.

### (Configuration explanation)

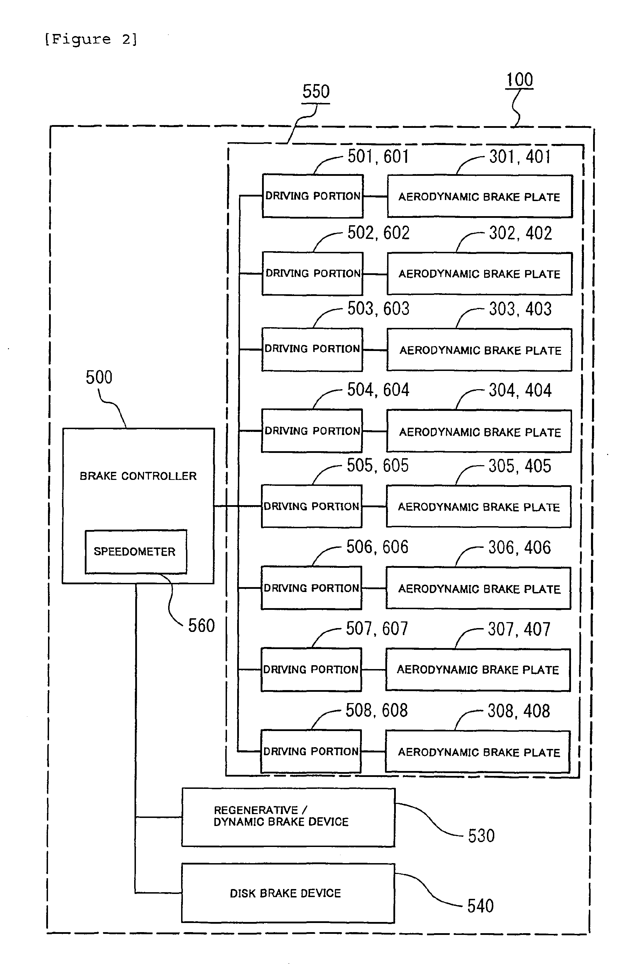

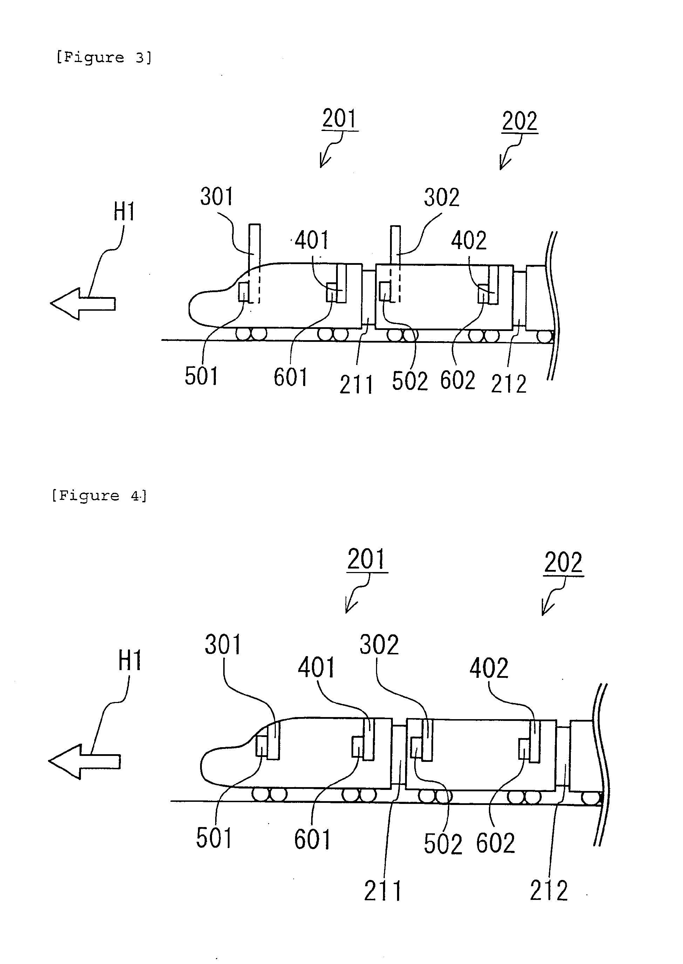

Subsequently, a configuration of the railway vehicle 100 will be described. Figure 2 is a schematic diagram illustrating an example of the configuration of the railway vehicle 100 and Figure 3 is an enlarged side view illustrating a part of the railway vehicle 100 in Figure 1.

As illustrated in Figure 2, the railway vehicle 100 includes a brake controller 500 for calculating a brake force on the basis of an instruction of a deceleration degree or the like mainly from a higher system, a regenerative/dynamic brake device 530 utilizing a powering motor, a disk brake device 540 using a pneumatic cylinder as a power source and generating a brake force by sandwiching a brake disk by a brake caliper through a brake pad, an aerodynamic brake device 550 utilizing aerodynamic resistance, and a powering motor, not shown. Moreover, the brake controller 500 has a speedometer 560 for recognizing a vehicle speed of the railway vehicle 100.

In this embodiment, it is assumed that the brake controller 500 has the speedometer 560, but that is not limiting, and the vehicle speed may be recognized on the basis of a speed signal from a higher system of the vehicle, not shown, or a method of independently recognizing the vehicle speed by detecting a revolution speed of a vehicle's wheel by a sensor, not shown, may be used.

For example, during ordinary running, the brake controller 500 operates the regenerative/dynamic brake device 530 and the aerodynamic brake device 550 if the speed of the railway vehicle 100 running at a high speed is to be reduced.

Then, the brake controller 500 operates only the regenerative/dynamic brake device 530 when the speed of the railway vehicle 100 has fallen to a predetermined high speed.

Moreover, the brake controller 500 operates only the disk brake device 540 using compressed air if the railway vehicle 100 at a low speed is to be stopped.

On the other hand, if sudden braking is applied in emergency such as entry of a person into a rail track, the brake controller 500 operates all of the regenerative/dynamic brake device 530, the aerodynamic brake device 550, and the disk brake device 540 using compressed air as necessary.

As illustrated in Figure 2, the aerodynamic brake device 550 is provided with driving portions 501 to 508 and 601 to 608 and aerodynamic brake plates 301 to 308 and 401 to 408. The driving portions 501 to 508 and 601 to 608 have a pneumatic driving source.

In this embodiment, the driving portions 501 to 508 and 601 to 608 are assumed to use a driving source using a pneumatic pressure but that is not limiting, and a driving source using an electric motor, a fluid pressure such as an oil pressure, a driving source using an explosive force by gunpowder and the like or any other arbitrary devices can be applied.

Subsequently, as illustrated in Figure 3, in this embodiment, the driving portion 501 and the aerodynamic brake plate 301 are provided on the advancing direction H1 side of the vehicle 201, and the driving portion 601 and the aerodynamic brake plate 401 are provided on the - H1 side opposite to the advancing direction H1 of the vehicle 201. The aerodynamic brake plates 301 and 401 are built in the vehicle 201 and are constructed to protrude to the outside of the vehicle 201 in an advancing operation. That is, the aerodynamic brake plates 301 to 308 and the aerodynamic brake plates 401 to 408 are arranged in a state not protruding to the outside of the vehicle when seen from the front of the formation so that they are not subjected to air resistance during ordinary running.

Similarly, the driving portion 502 and the aerodynamic brake plate 302 are provided on the advancing direction H1 side of the vehicle 202, and the driving portion 602 and the aerodynamic brake plate 402 are provided on the -H1 side opposite to the advancing direction H1 of the vehicle 202.

Moreover, as illustrated in Figure 3, the driving portion 501 drives advancing and retreating operations of the aerodynamic brake plate 301 on the basis of an instruction of the brake controller 500. Moreover, the driving portion 601 drives the advancing and retreating operations of the aerodynamic brake plate 401 on the basis of the instruction of the brake controller 500.
Similarly, the driving portion 503 drives the advancing and retreating operations of the aerodynamic brake plate 303 on the basis of the instruction of the brake controller 500 and the driving portion 603 drives the advancing and retreating operations of the aerodynamic brake plate 403 on the basis of the instruction of the brake controller, 500.

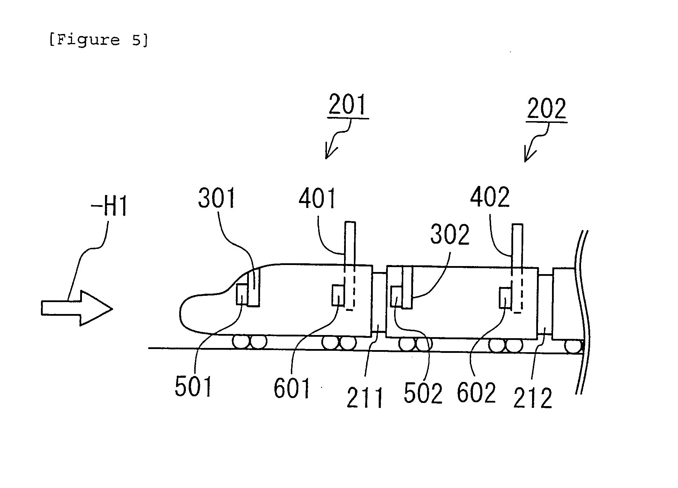

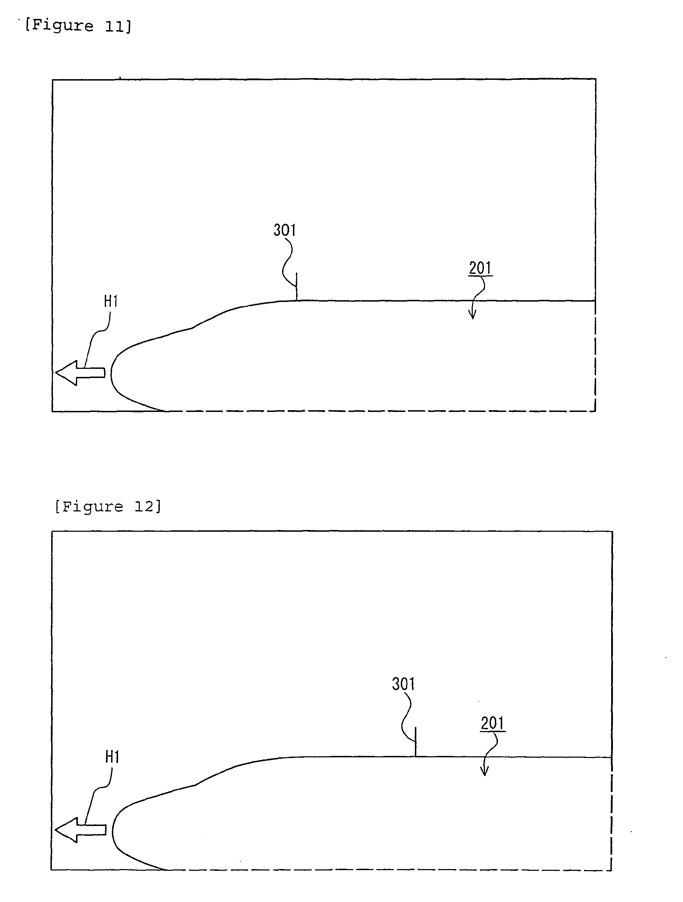

Subsequently, Figures 4 and 5 are schematic diagrams for explaining operations of the aerodynamic brake plates 301 to 308 and the aerodynamic brake plates 401 to 408 in the railway vehicle 100. Here, only the operations will be described, and the reasons thereof will be described in Figures 11 to 16.

First, as illustrated in Figure 4, if the railway vehicle 100 runs in the advancing direction H1, the brake controller 500 gives an instruction to the driving portion 501 in order to advance the aerodynamic brake plate 301 located on the advancing direction H1 side from the center part of the vehicle 201 of the railway vehicle 100. Similarly, the brake controller 500 gives an instruction to the driving portions 502 to 508 also in the vehicles 202 to 208 so as to advance the aerodynamic brake plates 302 to 308.

On the other hand, if the railway vehicle 100 runs in the direction -H1 opposite to the advancing direction H1 as illustrated in Figure 5, the brake controller 500 gives an instruction to the driving portion 601 of the vehicle 201 of the railway vehicle 100 so as to advance the aerodynamic brake plate 401. Similarly, the brake controller 500 gives an instruction to the driving portions 602 to 608 in the vehicles 202 to 208 so as to advance the aerodynamic brake plates 402 to 408.

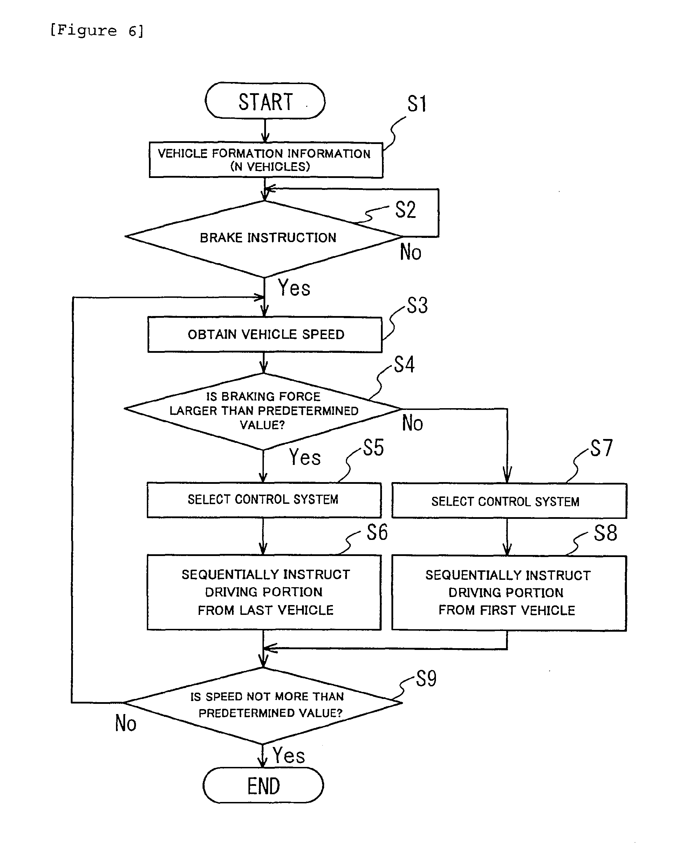

Subsequently, Figure 6 is a flowchart illustrating an example of the operation of the brake controller 500.

First, the brake controller 500 obtains vehicle formation information (N vehicles) (Step S1). That is, in the railway vehicle 100, if N in the vehicle formation information becomes large, a large brake force is required in order to obtain the same deceleration degree. In the vehicle formation information (N vehicles), the number of vehicles on which the aerodynamic brake plates 301 to 308 and the aerodynamic brake plates 401 to 408 are mounted is also included, and this information is used for determining how much of the brake force is borne by each of the aerodynamic brake plates 301 to 308 and the aerodynamic brake plates 401 to 408.

Subsequently, the brake controller 500 determines if a braking instruction has been received or not (Step S2). The braking instruction is based on a brake operation by an operator of the railway vehicle 100, for example, and includes a targeted deceleration degree of the entire formation. If it is determined that a braking instruction has not been received, the brake controller 500 repeats the processing at Step S2.

Subsequently, if it is determined that a brake instruction has been received, the brake controller 500 obtains a speed of the railway vehicle 100 from the speedometer 560 (Step S3). Here, the speedometer 560 measures a speed with respect to the advancing direction H1. The brake controller 500 obtains the speed from the speedometer 560.

In this embodiment, the brake controller 500 continuously obtains a vehicle speed if a braking instruction is received and utilizes it for selection of the control system, but that is not limiting, and the vehicle speed may be a speed immediately before or immediately after the braking instruction is received.

Subsequently, the brake controller 500 calculates a braking force for stopping the railway vehicle 100 from the braking instruction including the deceleration degree of the entire formation, the vehicle formation information (N vehicles) and the vehicle speed and determines whether the calculated braking force is not less than a predetermined value or not (Step S4). Here, the predetermined value is a threshold value for determining whether it is likely that the vehicle or the coupler of the vehicle or the like is affected or not.
In the above-described calculation process of the braking force, the braking forces generated by the regenerative/dynamic brake device 530, the disk brake device 540, and the pneumatic brake device 550, respectively, are also determined.

If it is determined that the braking force is not less than the predetermined value (Yes at Step S4), the brake controller 500 selects the control system (Step S5).
Specifically, the brake controller 500 selects the control system (each brake device and its control method or a combination thereof) from a table determined in advance in accordance with the value of the calculated braking force.

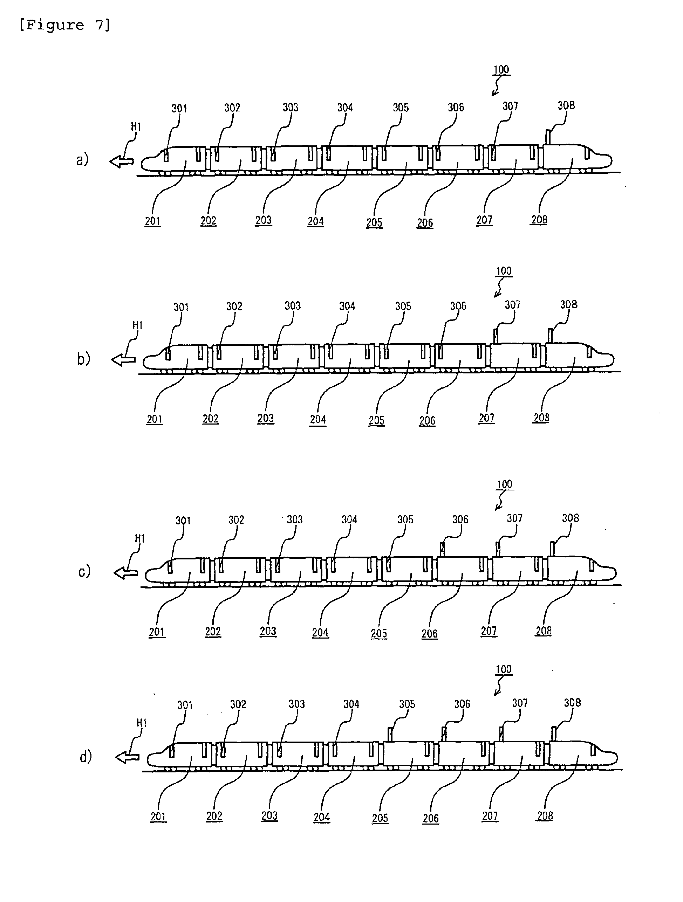

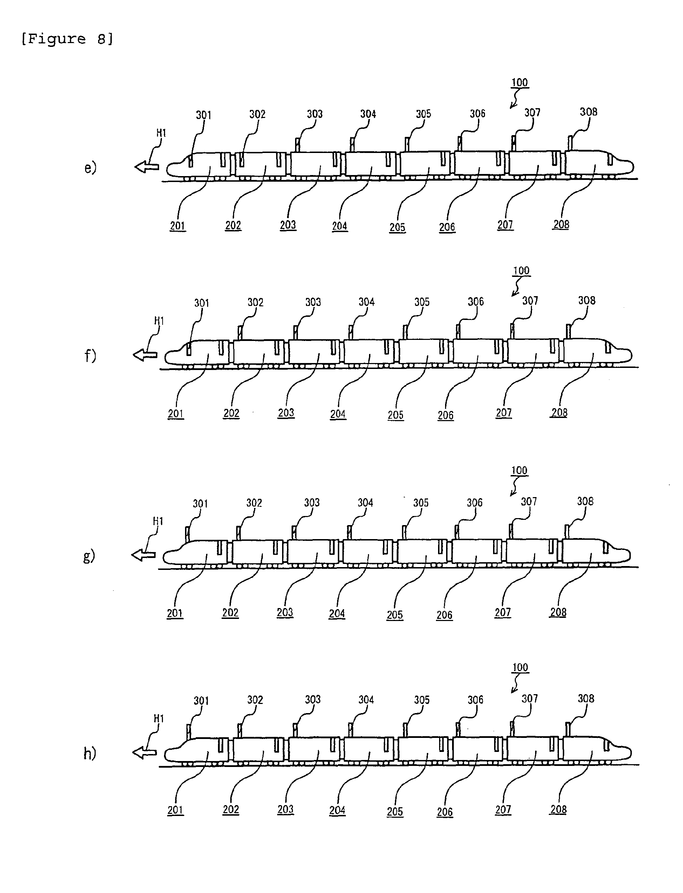

Figures 7 and 8 are schematic operation diagrams illustrating an example of the control system in the processing at Step S5 in Figure 6.

As illustrated in Figure 7(a) to 7(d) and 8(e) to 8(g), if the railway vehicle 100 is running in the advancing direction H1, it is assumed that a control system is selected in which the pneumatic brake device 550 as a brake device, and a control method of performing the advancing operation in the order of the aerodynamic brake plates 308, 307, 306, 305, 304, 303, 302, and 301 are used from the vehicle 208 to the vehicle 201.

As a result, as illustrated in Figures 7(a) to 7(d) and Figures 8(e) to 8(g), the brake controller 500 sequentially gives instructions from the last vehicle to the first vehicle of the railway vehicle 100 in the order of the driving portion 508 of the vehicle 208, the driving portion 507 of the vehicle 207, the driving portion 506 of the vehicle 206, the driving portion 505 of the vehicle 205, the driving portion 504 of the vehicle 204, the driving portion 503 of the vehicle 203, the driving portion 502 of the vehicle 202, and the driving portion 501 of the vehicle 201 (See Step S6 in Figure 6). As a result, the aerodynamic brake plates 308, 307, 306, 305, 304, 303, 302, and 301 sequentially perform the advancing operation.

In the above-described embodiment, it is assumed that all of the aerodynamic brake plates 301 to 308 sequentially perform the advancing operation, but that is not limiting, and one or a plurality of the aerodynamic brake plates 301 to 308 may perform the advancing operation, such control may be made that advancing operation start timing by the driving portions 501 to 508 is controlled simultaneously and the advancing speed is sequentially slowed in the order of the aerodynamic brake plates 308 to 301 and moreover, a predetermined number of aerodynamic brake plates are grouped as one set (those in a set operate at the same time), and such control may be made that each set sequentially performs the advancing operation. As a result, though the braking force or responsiveness is somewhat poorer than a control method which will be described later, the braking force is sequentially applied from the last vehicle to the first vehicle if the railway vehicle 100 is running at a high speed or has a long formation, and a bad influence on the behavior of the formation can be prevented.

On the other hand, in the processing at Step S4 in Figure 6, if it is determined that the braking force is not more than the predetermined value (No at Step S4), the brake controller 500 selects a control system (Step S7) .
Specifically, the brake controller 500 selects a control system (each brake device and a control method thereof or a combination thereof) from table data determined in advance in accordance with the value of the calculated braking force.

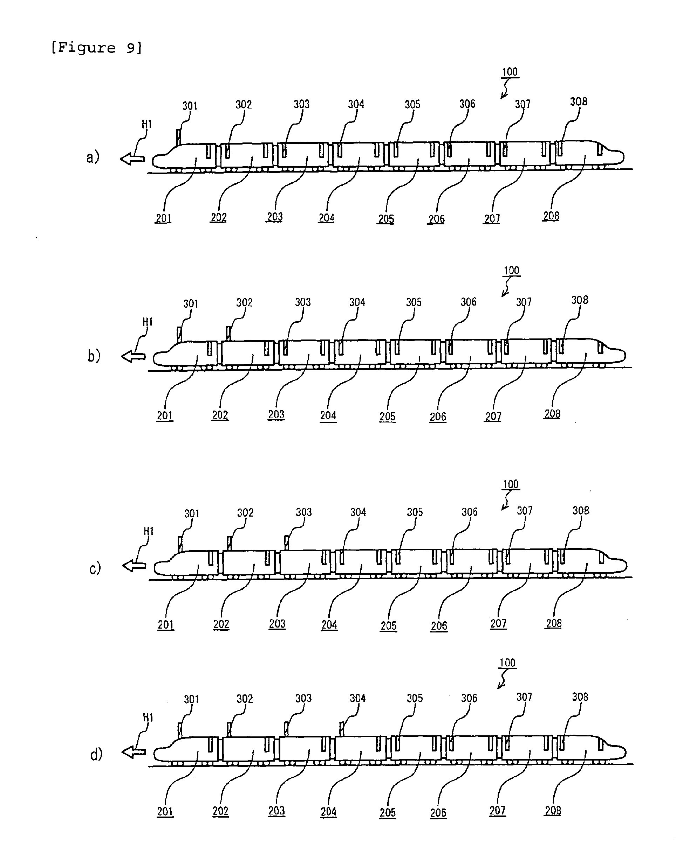

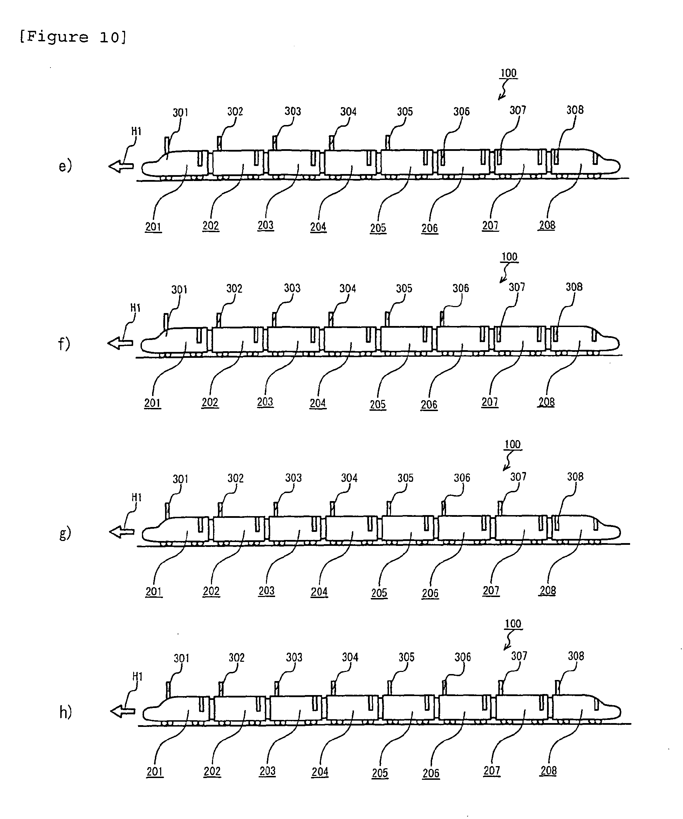

Figures 9 and 10 are schematic operation diagrams illustrating an example of a control system in the processing at Step S7 in Figure 6.

As illustrated in Figures 9(a) to 9(d) and Figures 9(e) to 9(g), if the railway vehicle 100 is running in the advancing direction H1, it is assumed that a control system is selected in which the pneumatic brake device 550 as the brake device and the control system of performing the advancing operation in the order of the aerodynamic brake plates 301 to 308 from the vehicle 201 to the vehicle 208 as a control method are used.

As a result, as illustrated in Figures 9(a) to 9(d) and Figures 10(e) to 10(g), the brake controller 500 sequentially gives instructions from the first vehicle to the last vehicle of the railway vehicle 100 in the order of the driving portion 501 of the vehicle 201, the driving portion 502 of the vehicle 202, the driving portion 503 of the vehicle 203, the driving portion 504 of the vehicle 204, the driving portion 505 of the vehicle 205, the driving portion 506 of the vehicle 206, the driving portion 507 of the vehicle 207, and the driving portion 508 of the vehicle 208 (See Step S8 in Figure 6). As a result, the aerodynamic brake plates 301 to 308 sequentially perform the advancing operation.

In the above-described embodiment, it is assumed that all of the aerodynamic brake plates 301 to 308 sequentially perform the advancing operation, but that is not limiting, and one or a plurality of the aerodynamic brake plates 301 to 308 may perform the advancing operation, such control may be made that advancing operation start timing by the driving portions 501 to 508 is controlled simultaneously and the advancing speed is sequentially slowed in the order of the aerodynamic brake plates 301 to 308 and moreover, a predetermined number of aerodynamic brake plates are grouped as one set (those in a set operate at the same time), and such control may be made that each set sequentially performs the advancing operation. As a result, the braking force is sequentially applied from the first vehicle to the last vehicle of the railway vehicle 100, and a desired deceleration degree can be obtained early while rapid deceleration is avoided, and the railway vehicle 100 can be reliably decelerated.

Lastly, as illustrated in Figure 6, the brake controller 500 determines whether the railway vehicle 100 is at a speed not more than a predetermined value or not (Step S9). Here, the speed of the predetermined value may be a speed at which the vehicle can be stopped within a predetermined distance only by the regenerative/dynamic brake device 530 and the disk brake device 540 or may be a substantially or fully stop speed (0 km/h).
If it is determined that the speed of the railway vehicle 100 exceeds a speed of a predetermined value, the brake controller 500 repeats the processing from Step S3 again (No at Step S9). On the other hand, if it is determined that the speed of the railway vehicle 100 is not more than the speed of the predetermined value, the processing is finished (Yes at Step S9).

In the above-described embodiment, only the aerodynamic brake device 550 is described in selection of the control system at Steps S5 and S7 in Figure 4, but the regenerative/dynamic brake device 530 and the disk brake device 540 may be arbitrarily combined with the aerodynamic brake device 550 and operated.

Moreover, the case in which the aerodynamic brake device 550 is operated until the vehicle speed of the railway vehicle 100 reaches the speed not more than the predetermined value is described, but that is not limiting, and the aerodynamic brake device 550 may be operated only for predetermined time or the aerodynamic brake device 550 may be operated intermittently.

Furthermore, in the control system at Step S7 in Figure 4, if the vehicle formation information (N vehicles) is one vehicle and the vehicle speed of the railway vehicle 100 is 30 km/h, for example, since the railway vehicle 100 can be sufficiently stopped only by the regenerative/dynamic brake device 530 and the disk brake device 540, table data that the brake controller 500 does not give an instruction to the aerodynamic brake device 550 is also included.

### (CFD (Computational Fluid Dynamics) data)

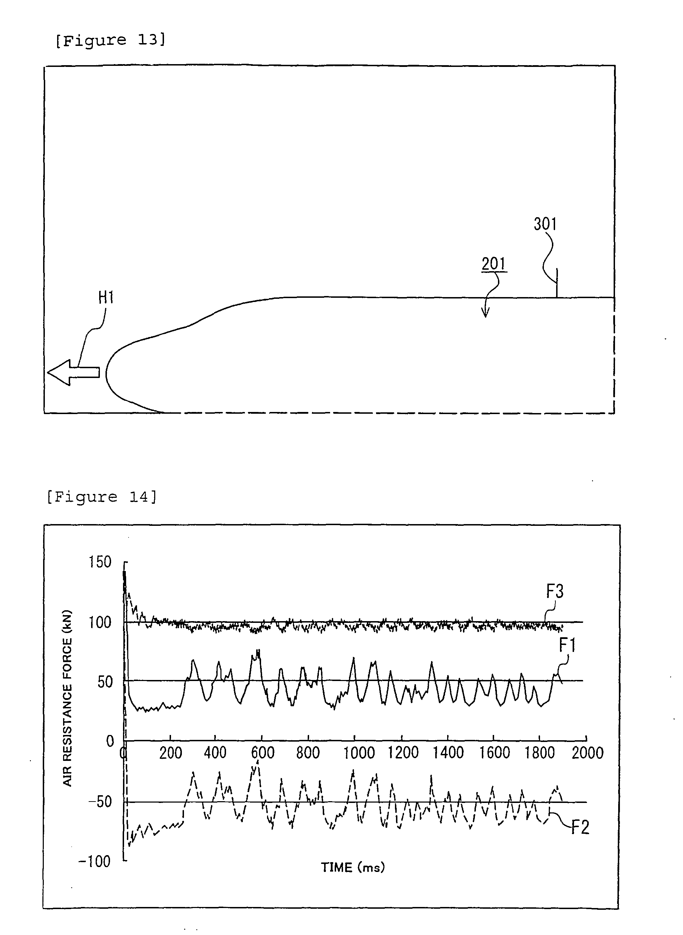

Subsequently, Figure 11 is a schematic diagram of a case in which the aerodynamic brake plate 301 is provided in the front in the advancing direction from the center part of the vehicle 201, Figure 12 is a schematic diagram of a case in which the aerodynamic brake plate 301 is provided at the center part of the vehicle 201, and Figure 13 is a schematic diagram of a case in which the aerodynamic brake plate 301 is provided in the direction opposite to the advancing direction from the center part of the vehicle 201.

Moreover, Figures 14 to 16 are schematic diagrams illustrating results by CFD analysis. The vertical axes in Figures 14 to 16 indicate an air resistance force (kN) and the horizontal axes indicate time (ms).

Lines in Figures 14 to 16 indicate a resultant force of a force on the resistance side applied on the aerodynamic brake plate 301 (force applied on the surface in the advancing direction H1) and a force on the detachment side (force applied on the back surface in the advancing direction H1).

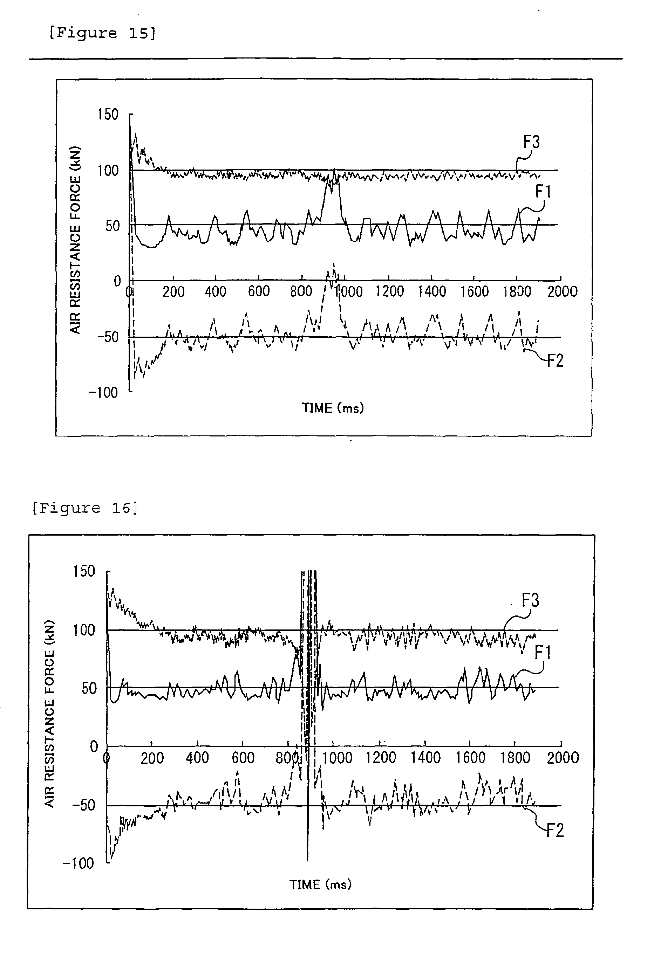

First, as illustrated in Figure 16, if the aerodynamic brake plate 301 is provided in the direction opposite to the advancing direction from the center part of the vehicle 201, the resultant force applied on the aerodynamic brake plate 301 largely fluctuates vertically at a position of 900 ms on the time axis (horizontal axis). This fluctuation in the resultant force applied on the aerodynamic brake plate 301 indicates that the vehicle 201 is vibrated. As a result, a bad influence is given to riding comfort and moreover, as the result of wasteful consumption of energy obtained from air resistance by the vibration, the effect of the aerodynamic brake plate 301 cannot be expected to the maximum.

On the other hand, as illustrated in Figures 14 and 15, if the aerodynamic brake plate 301 is provided in the front in the advancing direction from the center part of the vehicle 201, less change is found in the resultant force applied on the aerodynamic brake plate 301. As a result, the energy obtained from air resistance is effectively utilized, and it is known that the vehicle 201 can be efficiently decelerated by the aerodynamic brake plate 301.

As described above, in the brake controller 500 according to this embodiment, since each of the aerodynamic brake plates 301 to 308 is provided in the front in the advancing direction H1 of the vehicle from the center part of each of the vehicles 201 to 208 of the railway vehicle 100, if the railway vehicle is running in the advancing direction H1, the air flow can be received the strongest in the aerodynamic brake plates 301 to 308. As a result, the brake force generated in the aerodynamic brake plates 301 to 308 can be efficiently utilized.

Similarly, since each of the aerodynamic brake plates 401 to 408 is provided in the direction -H1 opposite to the advancing direction H1 of the vehicle from the center part of each of the vehicles 201 to 208 of the railway vehicle 100, if the railway vehicle is running in the direction -H1 opposite to the advancing direction H1, the air flow can be received the strongest in aerodynamic brake plates 401d to 408d. As a result, performances of the aerodynamic brake plates 401 to 408 can be efficiently utilized.

Moreover, since the vibration given to each of the vehicles 201 to 208 can be reduced, a bad influence on riding comfort of passengers in each of the vehicles 201 to 208 can be prevented.

### (Other examples)

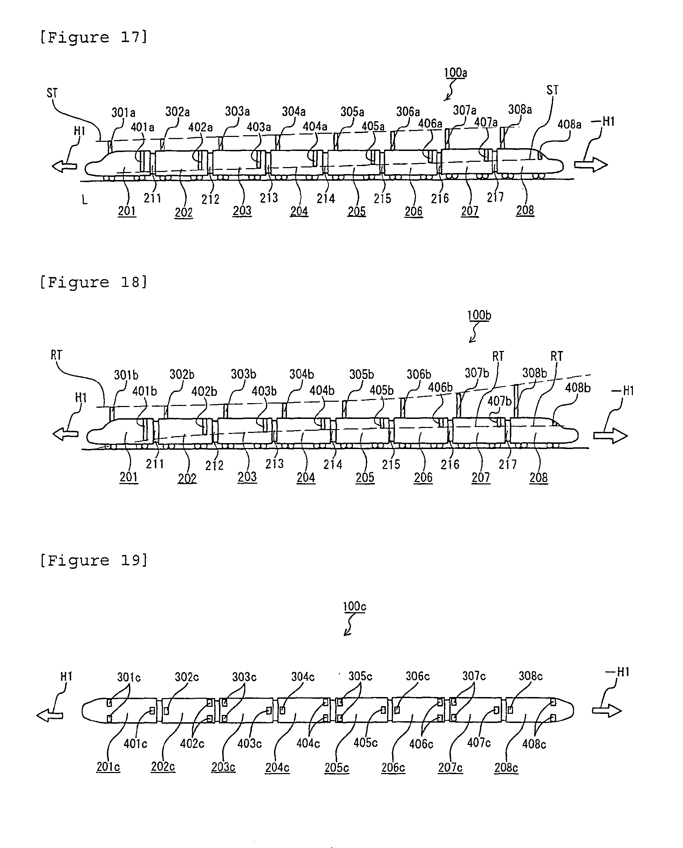

Subsequently, other examples of the aerodynamic brake device 550 of the railway vehicle 100 will be described. Figure 17 is a schematic side view illustrating another example of the aerodynamic brake device 550 of the railway vehicle 100, and Figure 18 is a schematic side view illustrating still another example of the aerodynamic brake device 550 of the railway vehicle 100.

First, as illustrated in Figure 17, an aerodynamic brake device 550a in a railway vehicle 100a is provided with aerodynamic brake plates 301a to 308a and aerodynamic brake plates 401a to 408a.

As illustrated in Figure 17, the aerodynamic brake plate 308a is provided so as to perform the advancing operation larger than any of the aerodynamic brake plates 301a to 307a. For example, the length of the aerodynamic brake plate 308a may be longer or an advancing/retreating amount may be adjusted so as to advance/retreat the longest by the driving portion 508.
The aerodynamic brake plate 307a is provided longer than any of the aerodynamic brake plates 301a to 306a. As described above, the aerodynamic brake plates 301a to 306a are provided so that the length of the aerodynamic brake plate becomes longer sequentially in the order of the aerodynamic brake plates 301a to 306a, and the uppermost points of a state where the aerodynamic brake plates 301a to 308a are advanced have a relationship of a straight line ST.

Similarly, as illustrated in Figure 17, the aerodynamic brake plate 401a is provided longer than any of the aerodynamic brake plates 402a to 408a. Then, the aerodynamic brake plate 402a is provided longer than any of the aerodynamic brake plates 403a to 408a. As described above, the aerodynamic brake plates 401a to 408a are provided so that the lengths of the aerodynamic brake plates 401a to 408a become shorter sequentially in the order of the aerodynamic brake plates 401a to 408a.

On the other hand, as illustrated in Figure 18, an aerodynamic brake device 550b in a railway vehicle 100b is provided with aerodynamic brake plates 301b to 308b and aerodynamic brake plates 401b to 408b.
Though Figure 18 has a configuration similar to that of Figure 17, the upmost points in a state where the aerodynamic brake plates 301b to 308b and the aerodynamic brake plates 401b to 408b are advanced have a relationship of a quadratic curve RT.

In this case, if the railway vehicles 100a and 100b are running in the advancing direction H1 and the braking force is needed, since projecting areas of the aerodynamic brake plates 301a to 308a increase from the front to the rear in the advancing direction H1, the aerodynamic brake plate in the rear of the advancing direction H1 is less subjected to the influence of the aerodynamic brake plate in the front in the advancing direction, and the performances of the aerodynamic brake plates 301a to 308a can be utilized to the maximum.

As described above, in a brake controller 500a or a brake controller 500b according to this embodiment, since the aerodynamic brake plates 301a to 308a or the aerodynamic brake plates 301b to 308b are provided in the front in the advancing direction H1 of the vehicle from the center part of each of vehicles 201a to 208a or each of vehicles 201b to 208b of the railway vehicle 100a or the railway vehicle 100b, if the railway vehicle is running in the advancing direction H1, the air flow can be received the strongest in the aerodynamic brake plates 301a to 308a. As a result, the brake force that can be generated by the aerodynamic brake plates 301a to 308a can be utilized efficiently.

Similarly, since the aerodynamic brake plates 401a to 408a or the aerodynamic brake plates 401b to 408b are provided in the direction -H1 opposite to the advancing direction H1 of the vehicle from the center part of each of the vehicles 201a to 208a or each of the vehicles 201b to 208b of the railway vehicle 100a or the railway vehicle 100b, if the railway vehicle is running in the direction -H1 opposite to the advancing direction H1, the air flow can be received the strongest in the aerodynamic brake plates 401a to 408a or in the aerodynamic brake plates 401b to 408b. As a result, the brake force that can be generated by the aerodynamic brake plates 401a to 408a or the aerodynamic brake plates 401b to 408b can be utilized efficiently.

Moreover, since the vibration given to each of the vehicles 201a to 208a or each of the vehicles 201b to 208b can be reduced, a bad influence on riding comfort of passengers in each of the vehicles 201a to 208a or each of the vehicles 201b to 208b can be prevented.

### (Still another example)

Subsequently, still another example of the aerodynamic brake device 550 in the railway vehicle 100 will be described. Figure 19 is a schematic top view illustrating still another example of the aerodynamic brake device 550 of the railway vehicle 100.

As illustrated in Figure 19, an aerodynamic brake device 550c in a railway vehicle 100c is provided with aerodynamic brake plates 301c to 308c and aerodynamic brake plates 401c to 408c.

If the railway vehicle 100c is running in the advancing direction H1 and the braking force is needed as illustrated in Figure 19, the aerodynamic brake plates 301c to 308c perform the advancing operation, while in the case of running in the direction -H1 opposite to the advancing direction H1 and the braking force is needed, the aerodynamic brake plates 401c to 408c perform the advancing operation.

Here, as illustrated in Figure 19, the aerodynamic brake plate 301c is provided in plural on the side of the vehicle 201c when seen from the top face of the vehicle 201c. The aerodynamic brake plate 302c is provided at the center part of the vehicle 202c when seen from the top face of the vehicle 201c. That is, when seen from the advancing direction H1 to the rear, the aerodynamic brake plate 301c and the aerodynamic brake plate 302c are arranged so as not to overlap each other.
That is, they are arranged such that, if the railway vehicle 100c is running in the advancing direction H1 and the braking force is needed, the air flow hits the aerodynamic brake plate 302c when it passes between the plurality of the aerodynamic brake plates 301c. Similarly, they are arranged such that, if the railway vehicle 100c is running in the advancing direction H1 and the braking force is needed, the air flow hits the aerodynamic brake plate 304c when it passes between the aerodynamic brake plates 303c.

Similarly, they are arranged such that, if the railway vehicle 100c is running in the direction -H1 opposite to the advancing direction H1 and the braking force is needed, the air flow hits the aerodynamic brake plate 405c when it passes between the aerodynamic brake plates 406c.

As described above, the aerodynamic brake plates 301c to 308c are controlled so as to shift when seen from the front to the rear in the advancing direction H1 of the railway vehicle 100c, the aerodynamic brake plate in the rear in the advancing direction is less affected by the aerodynamic brake plate in the front in the advancing direction, and even if a plurality of vehicles are formed, the performances of the aerodynamic brake plates 301c to 308c can be utilized to the maximum.

As described above, in a brake controller 500c according to this embodiment, since each of the aerodynamic brake plates 301c to 308c is provided in the front in the advancing direction H1 of the vehicle from the center part of each of the vehicles 201c to 208c of the railway vehicle 100c, if the railway vehicle is running in the advancing direction H1, the air flow can be received the strongest in the aerodynamic brake plates 301c to 308c. As a result, the brake force that can be generated by the aerodynamic brake plates 301c to 308c can be utilized efficiently.

Similarly, since each of the aerodynamic brake plates 401c to 408c is provided in the direction -H1 opposite to the advancing direction H1 of the vehicle from the center part of each of the vehicles 201c to 208c of the railway vehicle 100c, if the railway vehicle is running in the direction -H1 opposite to the advancing direction H1, the air flow can be received the strongest in the aerodynamic brake plates 401dc to 408d. As a result, the brake force that can be generated by the aerodynamic brake plates 401 to 408 can be utilized efficiently.

Moreover, since vibration given to each of the vehicles 201c to 208c can be reduced, a bad influence on riding comfort of passengers in each of the vehicles 201c to 208c can be prevented.

### (Still another example)

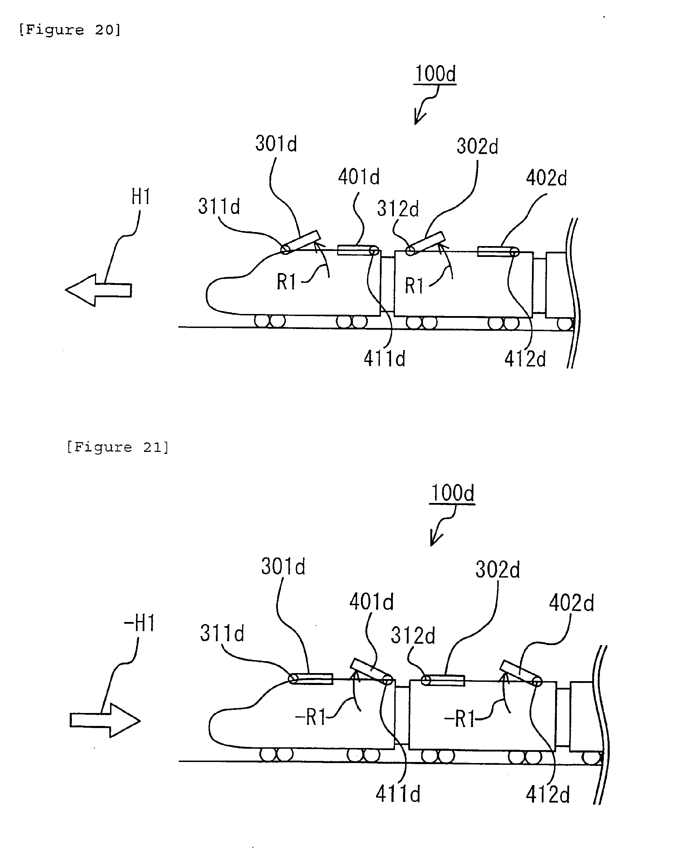

Figures 20 and 21 explain still another example of the aerodynamic brake device 550 in the railway vehicle 100. Figures 20 and 21 are schematic side views illustrating still another example of the aerodynamic brake device 550 of the railway vehicle 100.

Figure 20 illustrates a case in which a railway vehicle 100d is running in the advancing direction H1 and the braking force is needed, and Figure 21 illustrates a case in which the railway vehicle 100d is running in the direction -H1 opposite to the advancing direction H1 and the braking force is needed.

As illustrated in Figures 20 and 21, an aerodynamic brake device 550d in the railway vehicle 100d is provided with aerodynamic brake plates 301d to 308d and aerodynamic brake plates 401d to 408d.

As illustrated in Figure 20, if the railway vehicle 100d is running in the advancing direction H1 and the braking force is needed, the aerodynamic brake plates 301d to 308d are rotated in a direction of an arrow R1 around shafts 311d to 318d. As a result, air resistance works, and the braking force can be obtained.

Moreover, as illustrated in Figure 21, if the railway vehicle 100d is running in the direction -H1 opposite to the advancing direction H1 and the braking force is needed, the aerodynamic brake plates 401d to 408d are rotated in a direction of an arrow -R1 around shafts 411d to 418d. As a result, air resistance works, and the braking force can be obtained.

The aerodynamic brake plates 301d to 308d and the aerodynamic brake plates 401d to 408d are rotated around the shafts 311d to 318d and the shafts 411d to 418d by hydraulic driving like a flap of an aircraft. By making the rotation angle different, the projecting areas (projected area of the aerodynamic brake plate when seen from the front in the formation) of the aerodynamic brake plates 301d to 308d and the aerodynamic brake plates 401d to 408d can be arbitrarily set.

Moreover, in the above-described embodiments, the running of the railway vehicle 100 is assumed to be on the straight rail L, but that is not limiting, and in the case of a curve, the aerodynamic brake device 550 may execute control by considering a balance between right and left in the vehicles 201 to 208. As a result, a stop operation can be realized considering a moment (a centrifugal force) applied on the railway vehicle 100. Moreover, the explanation was made assuming that the railway vehicle 100 is running on the rail by wheels, but that is not limiting, and it may be a magnetically-levitated railway vehicle, for example.

As described above, in the brake controller 500d according to this embodiment, since the aerodynamic brake plates 301d to 308d are provided in the front in the advancing direction H1 of the vehicle from the center part of each of the vehicles 201d to 208d of the railway vehicle 100d, if the railway vehicle is running in the advancing direction H1, the air flow can be received the strongest in the aerodynamic brake plates 301d to 308d. As a result, the brake force that can be generated by the aerodynamic brake plates 301d to 308d can be utilized to the maximum.

Similarly, since each of the aerodynamic brake plates 401d to 408d is provided in the direction -H1 opposite to the advancing direction H1 of the vehicle from the center part of each of the vehicles 201d to 208d of the railway vehicle 100d, if the railway vehicle is running in the direction -H1 opposite to the advancing direction H1, the air flow can be received the strongest in the aerodynamic brake plates 401d to 408d. As a result, the brake force that can be generated by the aerodynamic brake plates 401d to 408d can be utilized efficiently.

Moreover, since vibration given to each of the vehicles 201d to 208d can be reduced, a bad influence on riding comfort of passengers in each of the vehicles 201d to 208d can be prevented.

In the above-described embodiment, any one of the vehicles 201 to 208 corresponds to a vehicle, the aerodynamic brake device 550 corresponds to an aerodynamic brake device, the advancing direction H1 corresponds to an advancing direction, the aerodynamic brake plates 301 to 308 and the aerodynamic brake plates 401 to 408 correspond to aerodynamic brake plates, the brake controller 500 and the driving portions 501 to 508 and 601 to 608 correspond to a controller, the speedometer 560 corresponds to a speed detecting device, and the vehicles 201 to 208 and the couplers 211 to 216 or the railway vehicle 100 correspond to a vehicle formation.

A preferred embodiment of the present invention is as described above, but the present invention is not limited to that. It should be understood that various other embodiments can be made without departing from the sprint and range of the present invention. Moreover, in this embodiment, actions and effects by the configuration of the present invention are described but these actions and effects are examples and do not limit the present invention.

## Claims

1. A control method for an aerodynamic brake device in which an operation of an aerodynamic brake plate provided in the front in an advancing direction of a formation from a center part of a part or the whole of vehicles of a formation of a plurality of vehicles is controlled, comprising:
a step of detecting a speed of the formation; and
a step of determining an operation of the aerodynamic brake plate in accordance with a deceleration degree generated by the aerodynamic brake device and the speed of the formation.

2. The control method for an aerodynamic brake device according to claim 1, wherein
the operation of the aerodynamic brake plate includes control such that the aerodynamic brake plate of a first vehicle has a larger advancing area than that of the aerodynamic brake plate of a second vehicle in the front in the advancing direction of the first vehicle.

3. The control method for an aerodynamic brake device according to claim 1, wherein
the operation of the aerodynamic brake plate includes control of advancing the aerodynamic brake plate of the first vehicle after the advance of the aerodynamic brake plate of the second vehicle in the front in the advancing direction of the first vehicle is started.

4. The control method for an aerodynamic brake device according to claim 1, wherein
the operation of the aerodynamic brake plate includes control of advancing the aerodynamic brake plate of the first vehicle after the advance of the aerodynamic brake plate of the second vehicle in the rear in the advancing direction of the first vehicle is started.
